# EUROPEAN PATENT APPLICATION

(11) **EP 2 544 183 A1**
(43) Date of publication of application: **09.01.2013**
(21) Application number: 10847054.3
(22) Date of filing: 22.11.2010
(51) Int. Cl.: G11B 7/007, G11B 7/004, G11B 7/24, G11B 20/10

(54) **OPTICAL DISC, OPTICAL DISK DEVICE, INFORMATION RECORDING METHOD, AND INFORMATION REPRODUCTION METHOD**

(30) Priority: 05.03.2010 JP 2010048582
(71) Applicant: Hitachi Consumer Electronics Co. Ltd., Tokyo 100-0004 (JP)
(72) Inventor: NISHIMURA Koichiro, Yokohama-shi Kanagawa 244-0817 (JP); NAGAI Yutaka, Yokohama-shi Kanagawa 244-0817 (JP)
(74) Representative: Moore, Graeme Patrick
(86) International application number: PCT/JP2010/070790
(87) International publication number: WO 2011/108158

(57) **Abstract**

An optical disc for recording information with a plurality of sorts of data recording densities. The optical disc has a plurality of data recording areas for recording information with mutually different data recording densities. Information about the data recording densities in the data recording areas is recorded in management information recording areas (BCA and PIC areas) with a specific format not depending on the data recording densities of the data recording areas. In this case, the data recording areas are located to be divided in the same plane of the disc or to be divided into a plurality of recording layers.

## Description

### INCORPORATION BY REFERENCE

The present application claims priority from Japanese Patent application JP2010-048582 on March 5, 2010, the content of which is hereby incorporated by reference into this application.

### TECHNICAL FIELD

The present invention relates to an optical disc for recording information with a plurality of sorts of data recording densities therein, an optical disc reproducing/reproducing apparatus therefor, and an information recording/reproducing method therefor.

### BACKGROUND ART

Development work is proceeding at a number of disc manufacturers to develop a disc having a more increased memory capacity by increasing the number of recording layers. With respect to a blu-ray disc (BD), for example, in order to record information of 100GB in a single sheet of disc, such an approach is made as to increase the number of recording layers in a standard disc having a standard data recording density of 25GB per layer to 4 and as to increase the number of recording layers in a high-density disc having a data recording density of 33GB per layer to 3. Appearance of such optical discs having different data recording densities and different recording formats requires an optical disc recording/reproducing apparatus to identify such differences and to be compatible therewith.

One of techniques associated with the above discloses an arrangement wherein an optical system (numerical aperture (NA)) is switched according to the type of a disc and the characteristic of a signal processing system is operatively changed in association with the optical system change, for example, PATENT LITERATURE 1. PATENT LITERATURE 2 also discloses an arrangement wherein, when a single sheet of disc has a plurality of recording layers recorded in different formats, format information on the plurality of recording layers is recording in a lead-in area in order to recognize the formats of the respective recording layers.

### CITATION LIST

### PATENT LITERATURES

PATENT LITERATURE 1: JP-A-9-282785
PATENT LITERATURE 2: JP-A-2007-26617

### SUMMARY OF INVENTION

### TECHNICAL PROBLEM

As mentioned above, in the case of a multi-layer disc of a blu-ray (BD) type, two types of data recording densities of a prior art standard density (25GB per layer) and a high density (33GB per layer) are enumerated as candidates. In this case, since 405nm is employed for the wavelength of blue color laser and 0.85 is employed for a numerical aperture (NA) even in any of these formats, format discrimination based on the reflectivity and so on the disc surface becomes difficult. Thus, it is impossible to identify the disc by format with use of the technique cited in the above PATENT LITERATURE 1.

In the PATENT LITERATURE 2, identification is made for a multilayer disc having two types of formats (of HD_DVD and DVD). To this end, format information on the respective layers are previously recorded in a system/data lead-in area (System/Data Lead in Area) or in BCA (Burst Cutting Area). However, this method is disadvantageous in the following points.

(1) In the case of the lead-in area, the format information itself is recorded dependently on the format of the layer having the lead-in area. In order to read out the information from the lead-in area, the format is required to be already known. However, when a correspondence between the layer and the format is not determined, it is anticipated to fail in reading out the information from the lead-in area.

(2) When an area (disc management information area) for recording of the format information therein is an area for information to be recorded with a high density format therein, an apparatus compatible only with the conventional standard density (low density) cannot read out the information from the high density format area, thus disabling discrimination of the disc.

(3) In the case of a multilayer disc, it is desirable to manage not only the formats of the respective layers but also layer recordable/unrecordable information. In this case, it becomes necessary that the format information should be able to recorded in a disc after manufactured. However, the lead-in area or the BCA shown in PATENT LITERATURE 2 is created during manufacture of a disc and information cannot be recorded therein after the disc manufacture.

An object of the present invention is to provide an optical disc which can record data with a plurality of types of data recording densities therein and wherein disc management information can be easily read out from the disc easily without any error, an optical disc recording/reproducing apparatus therfor, and an information recording/reproducing method therefore.

### SOLUTION TO PROBLEM

In the present invention, an optical disc for recording information therein with a predetermined recording density has a data recording area for recording information therein and also has a management information recording area for recording disc management information including information on the data recording density in the data recording area. The disc management information is recorded in the management information recording area with a specific format not depending on the data recording density of the data recording area.

In accordance with an aspect of the present invention, an optical disc for recording information with a plurality of recording densities has a plurality of data recording areas arranged to be divided in the same plane for recording information with mutually different data recording densities and also has a management information recording area for recording the respective data recording densities of the plurality of data recording areas and disc management information including information on boundary positions of the data recording areas. The disc management information is recorded with a specific format not depending on the data recording densities of the plurality of data recording areas in the management information recording area.

In accordance with another aspect of the present invention, an optical disc having a plurality of recording layers for recording information with a plurality of recording densities has a plurality of data recording areas for recording information with data recording densities different in the recording layers and also has a management information recording area for recording disc management information including information on the respective data recording densities of the data recording areas of the respective recording layers. The disc management information is recorded in the management information recording area with a specific format not depending on the respective data recording densities of the plurality of data recording areas.

In accordance with a further aspect of the present invention, an optical disc having a plurality of recording layers for recording information with a plurality of recording densities has a plurality of data recording areas for recording information with data recording densities different in the respective recording layers and also has a management information recording area for recording disc management information including the respective data recording densities of the plurality of data recording areas. The management information recording area is located in part of one of the plurality of data recording areas which has standard one of the data recording densities, and the disc management information is recorded in the part of the standard-density data recording area with a format of the data recording density of the standard data recording area.

In accordance with a yet another aspect of the present invention, in an optical disc recording/reproducing device for recording or reproducing information in a data recording area of an optical disc, disc management information including information on a data recording density of the data recording area is recorded in a management information recording area of the optical disc with a specific format not depending on the data recording density of the data recording area. The device includes a spindle motor for rotating the optical disc, an optical head for reading out the disc management information from the management information recording area of the optical disc and for recording information in the data recording area of the optical disc or for reproducing information, a recording/reproducing processor for processing a recording signal supplied to the optical head or a reproduction signal from the optical head, and a recording density determination circuit for determining a data recording density of a target data recording area or information indirectly associated with the data recording density on the basis of the disc management information read out by the optical head. The recording/reproducing processor selects and sets recording/reproducing processing conditions or stops the subsequent operation by a suitable method. When the number of layers in the disc and the data recording densities have a 1:1 relationship, for example, the recording/reproducing processor selects recording/reproducing conditions or stops the subsequent operation by a suitable method according to the disc layer number. Or recording capacity information of the disc may, in some cases, associated with the data recording density as another example. In such a case, the recording/reproducing processor selects recording/reproducing conditions or stops the subsequent operation by a suitable method according to the disc recording capacity information.

In accordance with a still further aspect of the present invention, in an information recording/reproducing method for recording information in a data recording area of an optical disc or reproducing information, disc management information including information on the data recording density of the data recording area is recorded in the management information recording area of the optical disc with a specific format not depending on the data recording density of the data recording area. The method includes the steps of setting reproduction conditions to reproduce the disc management information according to the specific format, reading out the disc management information from the management information recording area of the optical disc, determining the data recording density of the data recording area or information indirectly associated with the data recording density on the basis of the read-out disc management information, selecting and setting recording/reproducing processing conditions according to the determined data recording density, recording information in the data recording area or reproducing information therein according to the set recording/reproducing processing conditions or stopping the subsequent operation by a suitable method.

In accordance with an additional aspect of the present invention, in an information recording/reproducing method for recording information in a data recording area of an optical disc or reproducing the information in the data recording area, a management information recording area of the optical disc has a means for enabling an existing drive to acquire disc determination information necessary when the disc is mounted in the existing drive not compatible with the recording and reproducing of the disc and to perform correct processing operation (e.g., of safely stopping the function and ejecting the disc), since the disc management information including information on the recording and reproducing operation of the disc of the data recording area is recorded in the management information recording area with a specific format not depending on the data recording density of the data recording area.

### ADVANTAGEOUS EFFECTS OF INVENTION

In accordance with the present invention, the disc management information about an optical disc having information recorded therein with a plurality of types of data recording densities can be easily read out without any error. Even a device compatible only with a conventional standard recording density disc can perform disc determining operation, thus increasing a user's convenience. Further, even a device compatible with an optical disc having data recorded with a plurality of types of data recording densities can easily read out the disc management information without any error. In addition, when an optical disc not compatible with recording or reproducing operation of an existing drive is mounted in the existing drive, the existing drive can safely determine the disc and perform correct processing operation (such as safely stopping of the function and ejecting the disc) and thus can prevent erroneous erase of the disc data or such operation as to destroy the interior of the drive.
Other objects, features and advantages of the present invention will become clear from the description of embodiments of the present invention explained with reference to the attached drawings.

### BRIEF DESCRIPTION OF DRAWINGS

[FIG. 1] shows an example of recording layout of an optical disc (type A, type B) in embodiment 1.
[FIG. 2] shows a representation example of disc management information in the disc of embodiment 1.
[FIG. 3] shows an exemplary arrangement of an optical disc recording/reproducing device in embodiment 1.
[FIG. 4] shows another exemplary arrangement of the optical disc recording/reproducing device in embodiment 1.
[FIG. 5] shows a flow chart of recording/reproducing operations in embodiment 1.
[FIG. 6A] shows an example of recording layout of an optical disc (type C) in embodiment 2.
[FIG. 6B] shows another example of recording layout of the disc (type C) of embodiment 2.
[FIG. 7] shows a representation example of disc management information in the disc of embodiment 2.
[FIG. 8] shows an arrangement example of an optical disc recording/reproducing device in embodiment 2.
[FIG. 9] shows an address determining method based on a Tracking Error zerocross.
[FIG. 10A] shows a flow chat of recording/reproducing procedure in embodiment 2.
[FIG. 10B] shows another flow chart of recording/reproducing operations in embodiment 2.
[FIG. 11] shows an example of recording layout of an optical disc (type D) in embodiment 3.
[FIG. 12] shows a representation example of disc management information of an optical disc in embodiment 3.
[FIG. 13] shows an arrangement example of an optical disc recording/reproducing device in embodiment 3.
[FIG. 14A] shows a flow chart of recording/reproducing procedure in embodiment 3.
[FIG. 14B] shows another flow chart of recording/reproducing procedure in embodiment 3.
[FIG. 15] shows an example of recording layout of an optical disc (type E) in embodiment 4.
[FIG. 16] shows another example (type E') of recording layout of the optical disc in embodiment 4.
[FIG. 17] shows a flow chart of a recording/reproducing procedure in embodiment 4.
[FIG. 18] shows a flow chart of a processing procedure in embodiment 5.
[FIG. 19] shows an arrangement example of an optical disc recording/reproducing device in embodiment 5.
[FIG. 20] shows an example of a wobble structure in a PIC area in embodiments 1, 2, 4 and 5.
[FIG. 21] shows an example of an in-disc layout of the PIC area in embodiments 1, 2, 4 and 5.
[FIG. 22] shows an example of a disc information table of the PIC area in embodiments 1, 2, 4 and 5.
[FIG. 23] shows an example of a 1-7 modulation system table.

### DESCRIPTION OF EMBODIMENTS

Embodiments of the present invention will be explained with reference to the accompanying drawings.

### EMBODIMENT 1:

The present embodiment is directed to a multilayer blu-ray disc (BD) having all layers of a standard data recording density (of 25GB per layer) (which disc will be referred to as type A), or having all layer of a high density (of 33GB per layer) which disc will be referred to as type B). With respect to the number of layers, for example, the type A has 4 layers of each 25GB and the type B has 3 layers of each 33GB, the both types each having a total capacity of 100GB. However, the recording capacity per layer, the number of layers per disc, and the total recording capacity per disc are given only as an example, and thus the present invention is not limited to the example. Further, a difference in data recording density between the both types is explained by converting the difference to the recording capacity per layer of a user data area in this specification, only for the convenience of explanation. How to discriminate between the disc types A and B and how the recording/reproducing device processes it will be explained.

Table 1 shows major dimensions of recording formats in discs of type A and B for comparison. In this connection, a linear velocity is assumed to be 4.917m/s as a standard velocity of the type A disc. The type A disc (having a recording capacity of 25GB per layer) has a minimum mark length of 0.149 µm and a track pitch of 0.32 µm; whereas the type B disc (having a recording capacity of 33GB per layer)) has a minimum mark length of 0.113 µm and a track pitch of 0.32 µm. In this connection, the both type discs are assumed to have the same modulation rules for recording information signal and the same disc format including data on the discs, addressing, and wobbles synchronized therewith. In this explanation, the both type discs are assumed to have the same linear velocity, so that, since the data recording density of the type B is higher than the data recording density of the type A in a linear direction, the both type discs have different channel clock frequencies and wobble frequencies. For this reason, it becomes necessary to switch processing conditions according to these changes. That is, switching is required to be made over reproduction signal processing to minimum mark length, reproduction equalizer or recording strategy conditions to clock frequency, and address reproduction conditions to wobble frequency.
[TABLE 1]

**TABLE 1**

| | 25GB/layer | 33GB/layer | Related matter |
|---|---|---|---|
| Minimum mark length [µm] | 0.149 | 0.113 | Signal characteristic |
| Channel clock frequency [MHz] | 66 | 87.1 | Read Condition(EQ etc) Write Contidion(Strategy etc) |
| Wobble frequency [kHz] | 956.5 | 12626 | Address reproduction |

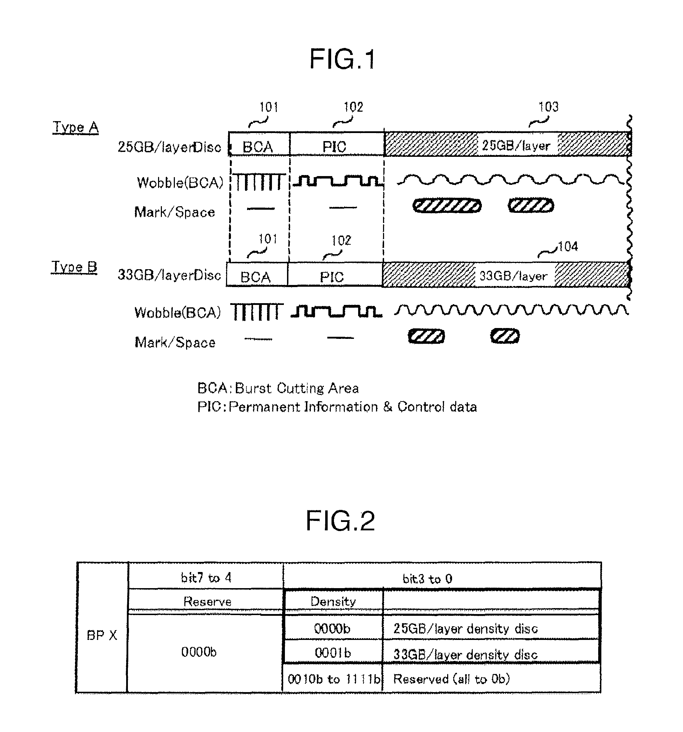

FIG. 1 shows an example of recording layout of optical discs (of types A and B).

In the discs of the types A and B, a BCA (Burst Cutting Area) area 101, a PIC (Permanent Information & Control data) area 102, and data recording area 103 or 104 are positioned from the inner peripheral side of the disc. Information is recorded in the BCA area 101 at the central side part of the disc in the form of a bar code having bars of a width of 4-17 µm and spaced by 28.6 µm from each other, and the recording density of the BCA area is not dependent on the recording density of the data recording area. The information is recorded in the BCA area after manufacture of the disc by burning out a reflection film using a strong infrared laser called YAG laser. The BCA area is used to record necessary information for the manufacturer after the disc manufacture, for example, including a serial ID for identification of each disc and encrypting information.

The PIC area 102 is management information area in a BD having management information superimposed with a change in wobble frequency with respect to a track wobble.

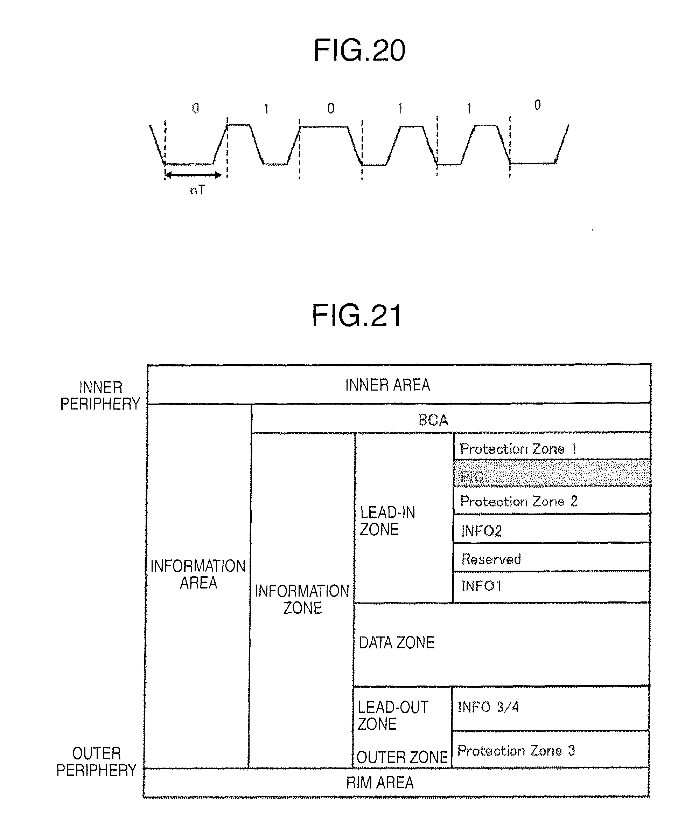

FIG. 20 shows a wobble structure of the PIC area. The wobble frequency is defined by an integral multiple of a channel clock frequency and forms a high frequency group (HFM group). In the area of the HFM group, since data information based on bit, mark and so on conforming to the disc format is not recorded, the wobble frequency can be set independently of the recording density of the data area. These are formed using a stamper or the like similarly to the wobble (groove) of the data area during disc manufacture, and a predetermined value such as a laser power value required in a record/reproduction mode is recorded therein.

FIG. 21 shows an area layout in one layer of a BD disc. An inner zone including a clamping area at the most inner peripheral side of the disc and a buffer area is provided, a rim area is located in the most outer peripheral side of the disc, information areas are located therebetween, and a BCA area is located at the most inner periphery thereof. An information zone starts from the outer peripheral side of the BCA area and includes a lead-in zone, a data zone, and lead-out zone (outer zone) sequentially from the inner peripheral side thereof.

The lead-in zone is a zone for recording various types of disc management information therein which includes a protection zone 1, a PIC zone, a protection zone 2, an INFO2 zone, a reserved zone and an INFO 1 zone, sequentially from the inner peripheral side thereof.

The BCA area is a recording density area independent of the data area as mentioned above, whereas the PIC area is of an integral multiple of the channel clock. Thus the both have different formats. For this reason, the protection zone 1 is provided as a buffer zone.

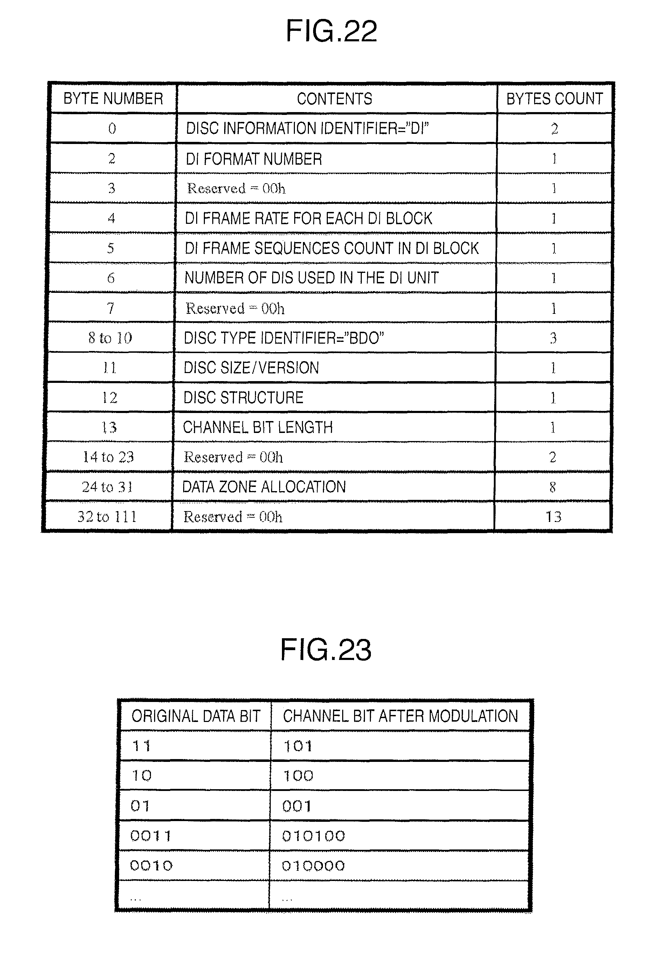

Information is recorded in the INFO 2 zone and subsequent INFO zones with the same format as the data zone. User record data is recorded in the data zone by adding an LDC (Long Distance Code) code to the data, and then modulating the data according to a 1-7 modulation table shown in FIG. 23 as an example. Thus, since the format of the data zone is different from the format of data of the aforementioned PIC area, the protection zone 2 is provided as a buffer zone.
The INFO 1 and 2 zones are zones for recording disc management information such as defect management therein, and are enforced in their robustness by recording the same data in the respective INFO zones.

FIG. 22 shows an example of a table of types and bytes in disc information (DI: Disc Information) recorded in the PIC area.

An identifier indicating that the byte table is DI information and a DI format number indicative of the type of information recorded in the table are located at the leading byte and at the next byte respectively.
Information required for DI demodulation such as a frame rate for DI information, a continuity number and a DI number is stored at bytes 4 to 7.
Disc-related information is stored at byte 8 and at the subsequent bytes. An identifier indicative of disc type is stored at bytes 8 to 10. Version information about a disc managed based on the Standards is recorded at byte 11.
Disc structure information about a layer number or the like and information dependent on the disc such as a channel bit length are recorded at bytes 12 and 13.
Data zone allocation information is recorded at bytes 24 to 31.
Information (data) is recorded in the data recording areas 103 and 104 with recording densities of 25 GB/layer and 33 GB/layer respectively.

In the present embodiment, disc management information such as data recording densities of the data recording areas 103 and 104 is recorded in the BCA area 101 or in the PIC area 102 during the disc manufacture. The formats of the BCA area 101 and the PIC area 102 are different from the data recording area in any of the disc types A and B and are the same as those in the types A and B. The disc management information is recorded with a specific recording density conforming to the formats. In other words, the recording densities recorded in the disc management information is set so as not to be dependent on the data recording densities of the data recording areas 103 and 104 in the disc.

FIG. 2 is a table showing a representation example of disc management information (data recording density information) in discs of types A and B. That is, FIG. 2 shows an example of bit arrangement when information (e.g., recording capacity per layer) associated with the data recording density information or the data recording density is recorded.

In the subsequent explanation, the data recording density information or the information (e.g., recording capacity per layer) associated with the data recording density will be referred to merely density information and represented, for example, as 25GB/layer, hereinafter.

In this specification, a disc having to a recording density of 25GB/layer (type A) is represented by and defined as "0000" bit, and a disc having a recording density of 33GB/layer (type B) is represented by and defined as "0001" bit. The recording density of the disc in question and the information associated with the data recording density thereof can be discriminated by identifying the bit value.

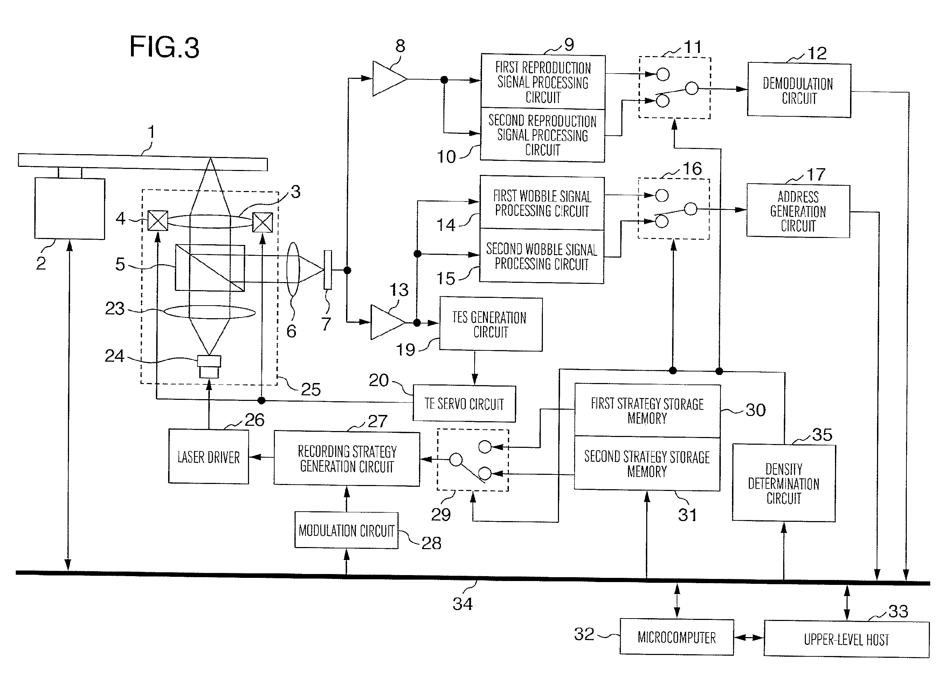

FIG. 3 shows an example of an arrangement of an optical disc recording/reproducing device according to the present embodiment.

Explanation will be made as to major constituent elements of the device. Reference numeral 1 denotes an optical disc (BD shown in FIG. 1), numeral 2 denotes a spindle motor for rotating the optical disc, 25 an optical head. The optical head 25 reads out disc management information from the optical disc 1 and performs information recording/reproducing operation over the data recording areas 103 and 104 of the optical disc 1 by applying a laser beam (blue laser having a wavelength of about 405nm) to the optical disc. In order to get compatible with a plurality of data recording densities, the device includes a density determination circuit 35, first and second reproduction signal processing circuits 9 and 10, first and second wobble signal processing circuits 14 and 15, and first and second strategy storage memories 30 and 31. A microcomputer 32 controls reading out of the disc management information, setting of the recording/reproducing processing circuits, execution of recording/reproducing operation, and so on.

In the present embodiment, the device reads out the disc management information from the BCA area 101 or the PIC area 102 in the optical disc, and determines in the density determination circuit 35 whether the target disc has density information of 25GB/layer or 33GB/layer. According to the determination result, the device switches between the first and second reproduction signal processing circuits 9 and 10 and demodulates a reproduction signal in a demodulation circuit 12. The device also switches between the first and second wobble signal processing circuits 14 and 15 and reproduces a recording/reproducing address in an address generation circuit 17. The device also switches between the first and second strategy storage memories 30 and 31 and generates a recording signal in a recording strategy generation circuit 27. A reproduction equalizer is set according to a minimum mark length or a clock frequency in the changeover between the reproduction signal processing circuits 9 and 10, address reproduction is set according to the wobble frequency in the changeover between the first and second wobble signal processing circuits 14 and 15, and a recording strategy is set according to the clock frequency in the changeover between the first and second strategy storage memories 30 and 31.

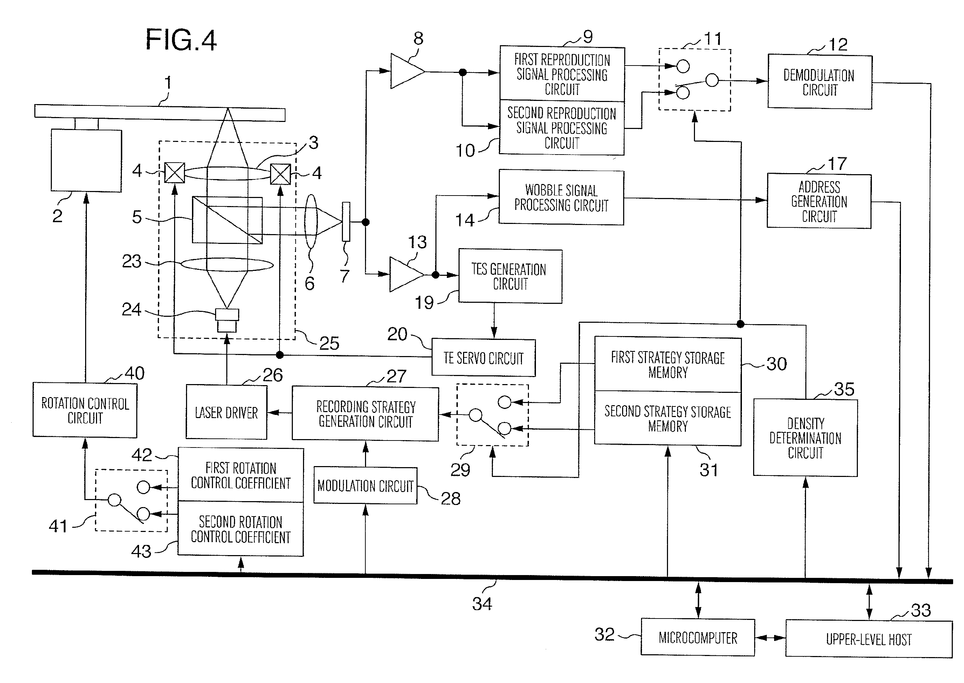

FIG. 4 shows another arrangement example of the optical disc recording/reproducing device. When compared with the arrangement of the FIG. 3, a rotation control circuit 40 for controlling rotation of the spindle motor 2 and first and second rotation control coefficient storage memories 42 and 43 are provided, and the first and second wobble signal processing circuits 14 and 15 in FIG. 3 are removed. The density determination circuit 35 determines whether the target disc has density information of 25GB/layer or 33 GB/layer to switch between the first and second rotation control coefficient storage memories 42 and 43. This enables the rotational speed of the disc to be changed according to the density and enables reproduction of a constant wobble frequency.

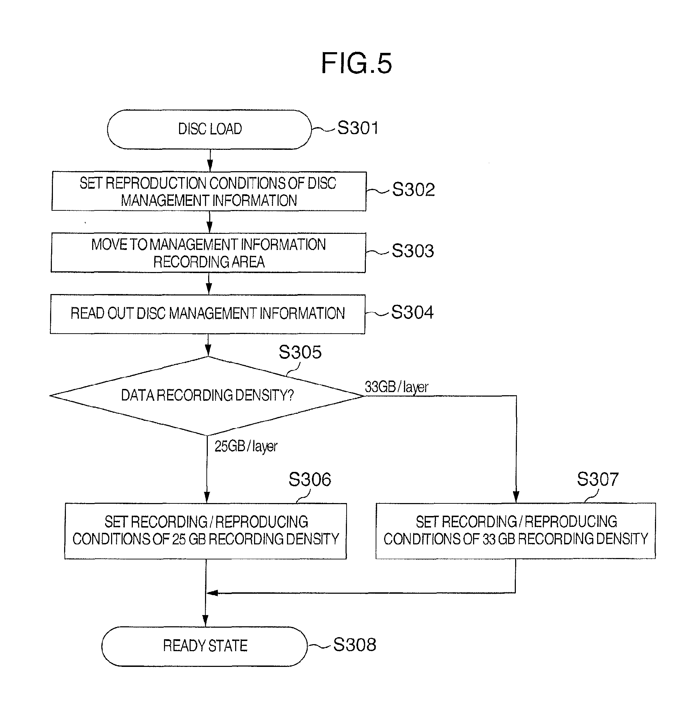

FIG. 5 shows a flow chart of a procedure of recording/reproducing operations in the present embodiment.

In a step S301, a disc is mounted in the optical disc device. In this case, the mounted disc is of a type A of 25 GB/layer or of a type B of 33 GB/layer.

In a step S302, reproduction conditions are set to read out the disc management information (data recording density information) from the disc. That is, the reproduction conditions are set according to the format of the BCA area 101 or the PIC area 102.

In a step S303, the optical head is moved to the management information recording area (to the BCA area or PIC area).

In a step S304, the device reads out the disc management information from the management information recording area.

In a step S305, the device determines whether the disc in question is of the type A or B of 25 GB/layer or 33 GB/layer on the basis of the read-out recording density information.
1. Determination based on information about the layer structure of the disc recorded at the byte 12.
2. Determination based on Disk Information such as version information about the disc recorded at the byte 11.
3. Determination based on channel bit information of the disc recorded at the byte 13.
When the device determines that the disc is of the type A of 25 GB/layer according to one of the above methods, control proceeds to a step S306 and sets it in recording/reproducing conditions (reproduction signal processing circuit, wobble signal processing circuit, recording strategy) of 25 GB/layer.

When the device determines that the disc is of the type B of 33 GB/layer, control goes to a step S307, and sets it in recording/reproducing conditions (reproduction signal processing circuit, wobble signal processing circuit, recording strategy) of 33 GB/layer.

In a step S308, the device waits for a command from a host computer to instruct recording or reproduction of information. In the presence of a command, the device executes recording/reproducing operation under conditions set in the step S306 or S307.

In the present embodiment, since the disc management information is recorded in the BCA or PIC area with a specific format, the reproduction conditions for the management information can be uniquely determined. Thus, even when a disc having any of the recording densities is mounted in the device, the reproduction conditions for the management information is the same for the both type discs. Therefore, the device can easily determine the recording density of the mounted disc without any error and can execute the corresponding recording/reproducing operation.

### EMBODIMENT 2:

The present embodiment is applied to a disc (which will be referred to as type C, hereinafter) having a standard area of a standard data recording density (of 25 GB/layer) and an area of a high density (of 33 GB/layer) in the same plane (or layer). For the convenience of explanation, the number of layers is set to be one, but may be set to be 2 or more. With respect to the type C disc, any of a conventional device compatible with the standard density (of 25 GB/layer) and a device compatible with the high density (of 33 GB/layer) can record information in the corresponding area of the associated device or reproduce the information therefrom.

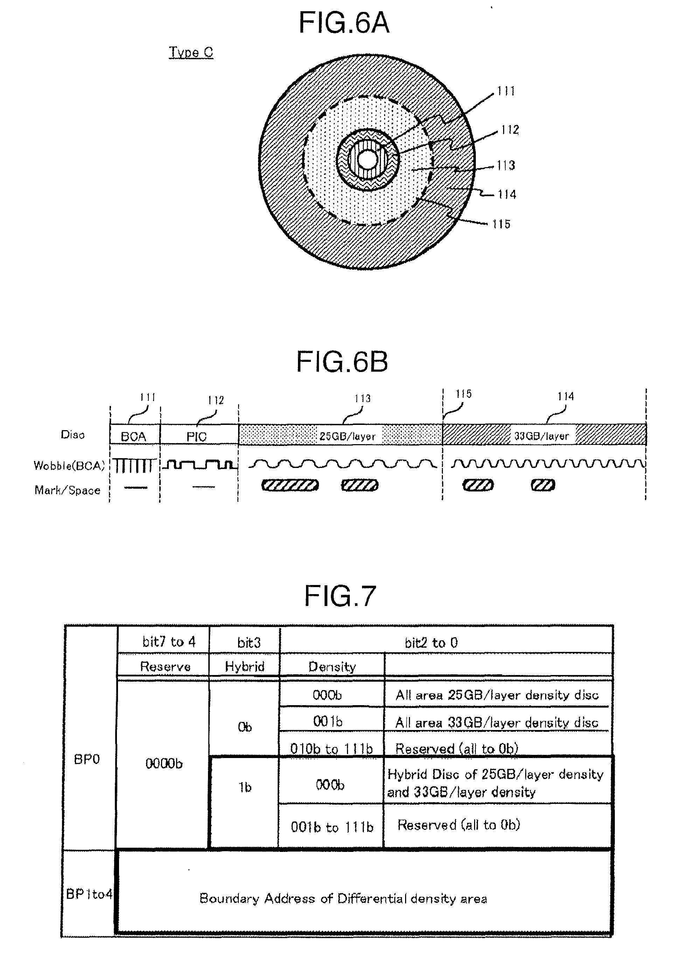

FIGS. 6A and 6B show an example of a recording format of an optical disc (of a type C), wherein FIG. 6A is a planar arrangement thereof and FIG. 6B is an arrangement in its radius direction.

The type C disc has a BCA area 111, a PIC area 112, a first recording density area (of 25 GB/layer) 113, and a second recording density area (of 33 GB/layer) 114, arranged in the same plane in this order from its inner peripheral side. Reference numeral 115 denotes a boundary between the first and second recording density area 113 and 114. The boundary 115 may have a non-record area (gap area) of a predetermined width in its radius direction. The disc management information (data recording density information) is recorded in the BCA or PIC area 111 or 112. Since the BCA area 111 and the PIC area 112 have inherent formats different from that of the user data recording area, the disc management information is recorded with a specific recording density. In other words, the recording density of the disc management information is not depending on the data recording densities of the data recording density areas 113 and 114 in the disc.

FIG. 7 shows a representation example of disc management information (data recording density information) in a disc C, that is, shows an example of bit layout when density information is recorded. As the contents of the information, an item (Hybrid) indicating the presence or absence of a plurality of recording densities is added, and positional information (address value) on the recording density boundary is recorded. When Hybrid="1", this means that the disc is a mixed disc (type C), and a plurality of density information and the boundary address value are recorded. When Hybrid="0", this means that the disc has a single recording density (type A or B). Based on the representation of FIG. 7, discrimination among the types A, B and C can be achieved.

In this connection, as a method of recording the disc management information such as the data recording density information in the disc C, the recording is considered to be made based on a PIC format code shown in FIGS. 20 to 22.

When the data recording density is determined by reading out the disc management information from the PIC area in FIG. 22, methods which follow are considered.
1. Determination based information on the layer structure of the disc recorded at byte 12.
2. Determination based on Standards management information such as disc version information recorded at byte 11.
3. Determination based on channel bit information recorded at byte 13.

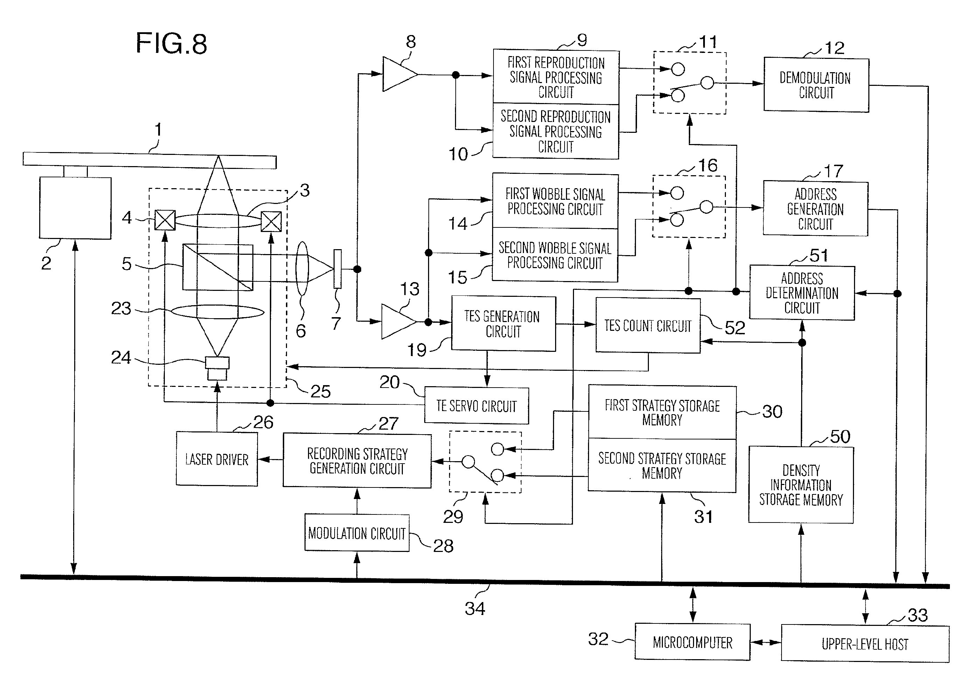

FIG. 8 shows an arrangement example of the optical disc recording/reproducing device in accordance with the present embodiment. The present embodiment corresponds in arrangement to FIG. 3, but a density information storage memory 50, an address determination circuit 51, and a Tracking Error zerocross Signal (TES) count circuit 52 are added.

The density information or the boundary address information read out from the type C disc is stored in the density information storage memory 50 to be referred to by the address determination circuit 51. The address determination circuit 51 receives the current address information from the address generation circuit 17 and determines the density of the target area (25 GB/layer or 33 GB/layer). Based on the determination result, changeover is carried out between the first and second reproduction signal processing circuits 9 and 10, between the first and second wobble signal processing circuits 14 and 15, and between the first and second strategy storage memories 30 and 31. A TES until a target area (target address) is counted, an the number of tracks is counted by the TES count circuit 52 to perform seek operation to the target area.

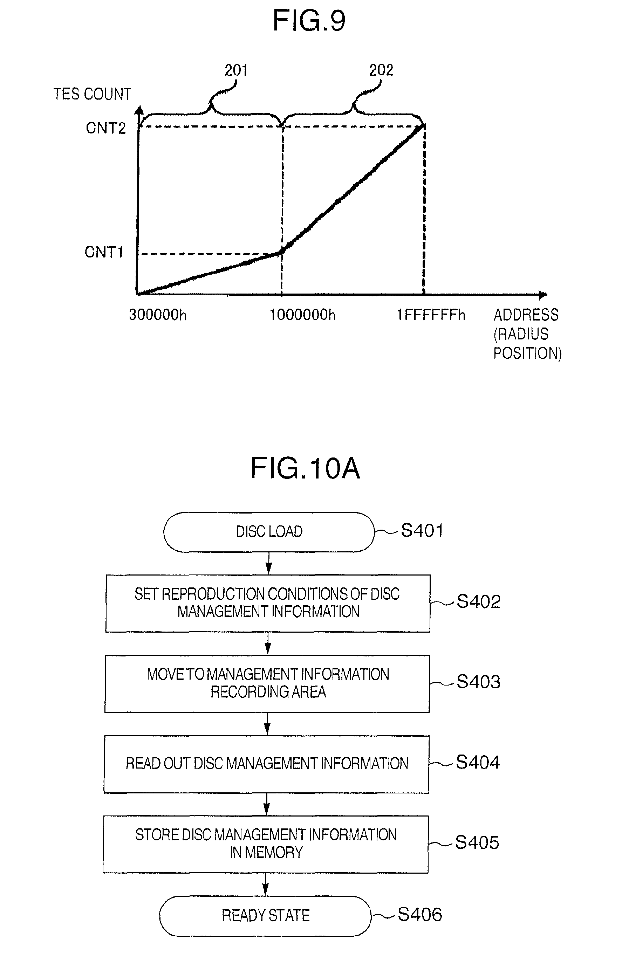

FIG. 9 shows an address determining method based on the TES. Abscissa denotes address value (radius position) and abscissa denotes TES count by the TES count circuit 52. A TES zone 201 is an area of 25 GB/layer, a zone 202 is an area of 33 GB/layer, and a boundary address is "1000000h". As the address is increased, the TES count increases, but the gradient of the TES count depends on the recording density and the zones 201 and 202 are different in the gradient. When a TES count CNT1 at the boundary address of "1000000h" is previously calculated and counting is made until CNT1 by the TES count circuit 52, the boundary address can be sought. Further, when a TES from the boundary is counted, the target area (address) can be reached.

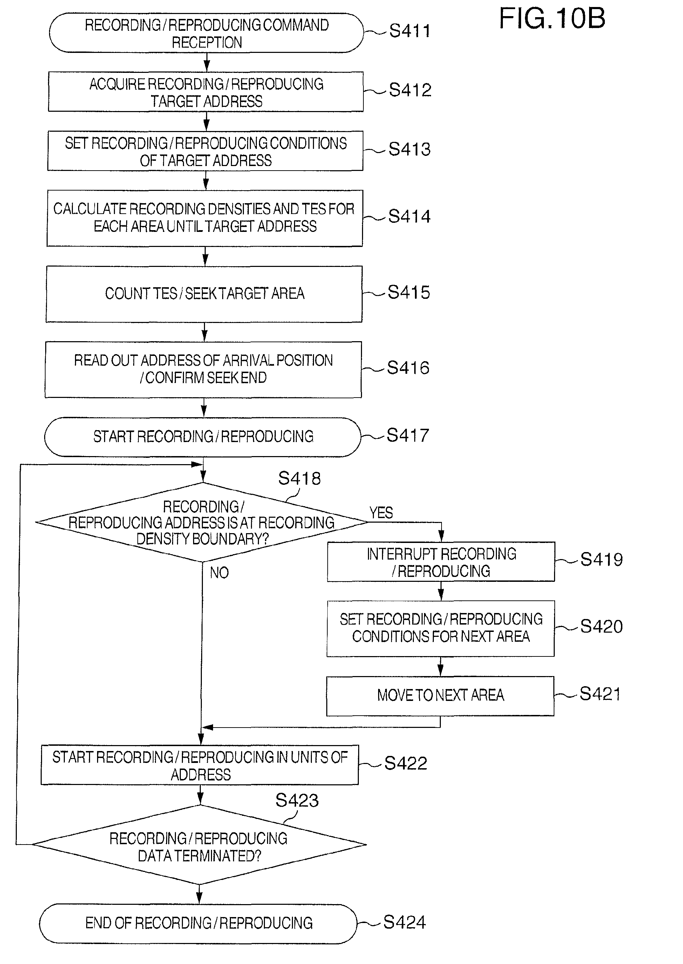

FIGS. 10A and 10B are flow charts showing a procedure of recording/reproducing operations in the present embodiment, wherein FIG. 10A shows steps when a disc is loaded and FIG. 10B shows steps in a recording/reproducing operation mode.

In a step S401, a disc is loaded in the optical disc device. In this case, the disc is of the type C having an area of a standard area (of 25 GB/layer) and an area of a high density (of 33 GB/layer) present in the same plane.

In a step S402, reproduction conditions are set for reading out disc management information (data recording density information) from the disc. That is, reproduction conditions conforming to the format of the BCA or PIC area 111 or 112 are set.

In a step S403, the optical head is moved to the management information recording area (BCA or PIC area 111 or 112) on the disc.

In a step S404, disc management information is read out from the management information recording area.

In a step S405, the disc management information (data recording density, density boundary address value) read out from the management information recording area is stored in the density information storage memory 50.

In a step S406, the device waits for a command from a host computer to instruct recording or reproduction of information.

Control goes to the next recording/reproducing operation.

In a step S411, the device receives the command for recording/reproducing of the information from the host computer.

In a step S412, the device acquires a target address for the recording/reproducing operation from the received command.

In a step S413, from the target address and the disc management information (data recording density, density boundary address value) stored in the density information storage memory 50, recording/reproducing conditions at the target address are set. That is, the recording/reproducing conditions (reproduction signal processing circuit, wobble signal processing circuit, recording strategy) are, modified to conditions recording/reproducing conforming to optical head 25 GB/layer or 33 GB/layer and set.

In a step S414, from the target address and the disc management information stored in the density information storage memory 50, a data recording density for each area until the target address and a TES until the target address are calculated.

In a step S415, the TES is counted to perform seeking operation to the target area.

In a step S416, an address at an arrival position is read out to confirm the end of seeking operation.

In a step S417, data recording/reproducing operation is started.

In a step S418, it is determined whether or not the recording/reproducing address is the boundary address of the recording density. When the recording/reproducing address is the boundary address, the device goes to a step S419; whereas, when the recording/reproducing address is not the boundary address, the device goes to a step S422.

In a step S419, the device interrupts the recording/reproducing operation.

In a step S420, recording density information about the next area is read out from the density information storage memory 50, and recording/reproducing conditions (reproduction signal processing circuit, wobble signal processing circuit, recording strategy) corresponding to the read-out density are set.

In a step S421, the head is moved to the next recording density area.

In a step S422, recording/reproducing operation is carried out in units of one address.

In a step S423, it is determined whether or not the recording/reproducing data is fully completed. When there is remaining data, the device returns to the step S418 to continue the operation. When the remaining data becomes less, the device completes its recording/reproducing operation at a step S424.

In the present embodiment, even in the case of the type C disc having different data recording densities present in the same plane, the disc management information (recording density layout, boundary address) is recorded in the BCA or PIC area with fixed formats. For this reason, reproduction conditions for the management information can be uniquely determined easily without any error. And recording/reproducing operations suitable for the respective recording densities can be executed according to the recording density at the target position in the disc.

### EMBODIMENT 3:

The present embodiment is directed to use of a multilayer disc (which will be referred to as type D, hereinafter) having layers each having standard data recording density (of 25 GB/layer) and layers each having a high density recording density (of 33 GB/layer). With respect to the type D disc, any of the prior art device compatible with the standard density (of optical head 25 GB/layer) and the high density device compatible with the high density (of 33 GB/layer) can perform recording/reproducing operation over the corresponding layer of the associated type disc.

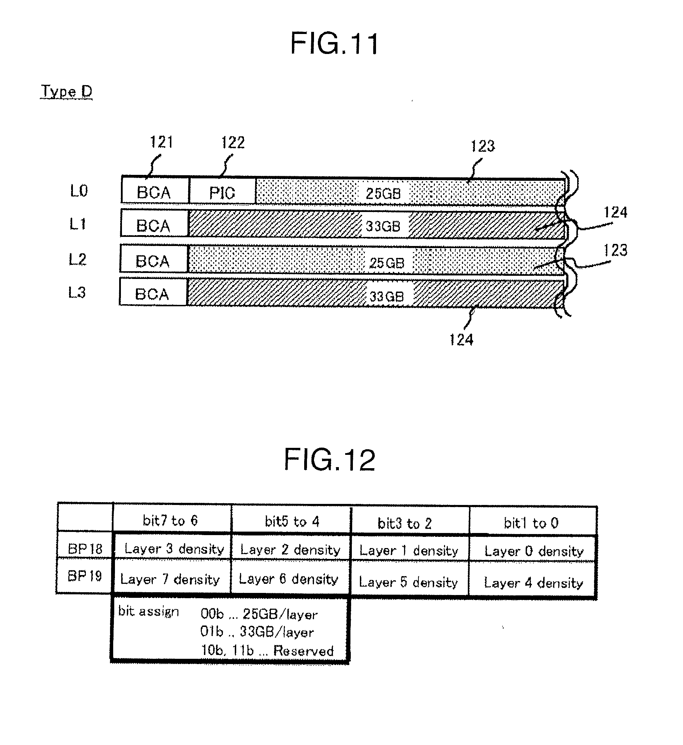

FIG. 11 shows an example of a recording format of the optical disc of the type D. In this case, a structure of a total of four layers of a 25 GB/layer area layer and a 33 GB/layer area layer arranged alternately is shown as an example. The respective recording layers are denoted by L0, L1, L2 and L3 sequentially from the surface side of the disc. In each layer, a BCA area 121, a PIC area 122, and data recording areas 123 and 124 are arranged in each layer sequentially from the inner peripheral side of the disc. Data is recorded in the data recording area 123 or 124, with a data recording density of 25 or 33 GB/layer. In this connection, the BCA area 121 is present in each layer, but the PIC area 122 is formed only in the layer LO. In the illustrated example, the disc management information (data recording density information) is recorded in the PIC area 122. Since the PIC area 122 has an inherent format different from that of the user data recording area, the disc management information is recorded in a specific recording density. In other words, the recording density of the disc management information is not depending on the data recording density of the adjacent data recording area 123. Since the recording density of the layer L0 having the PIC area 122 has always a standard recording density of 25 GB/layer, the multilayer device can advantageously have a compatibility with the prior art device compatible with the standard density of 25 GB/layer. Or the PIC area 122 may be located in a recording layer having a minimum data recording density.

As a method of recording data recording density information in the PIC area, it is considered to record Standards management information such as disc version information, a channel bit length, and recording-density-related information such as disc structure information when the number of layers is different in disc depending on, e.g., the recording density, as shown in FIG. 22.

FIG. 12 shows a representation example of the disc management information (data recording density information) in the disc D, that is, showing an example of bit layout when density information is recorded. The contents of information is recorded in a description column of the recording density provided in each layer in the form of 2 bits of data recording density. In this case, the number of columns corresponding to 8 layers is provided, the layer of a recording density of 25 GB/layer is defined and described as "00" bit, and the layer of a recording density of 33 GB/layer is defined and described as "01" bit.

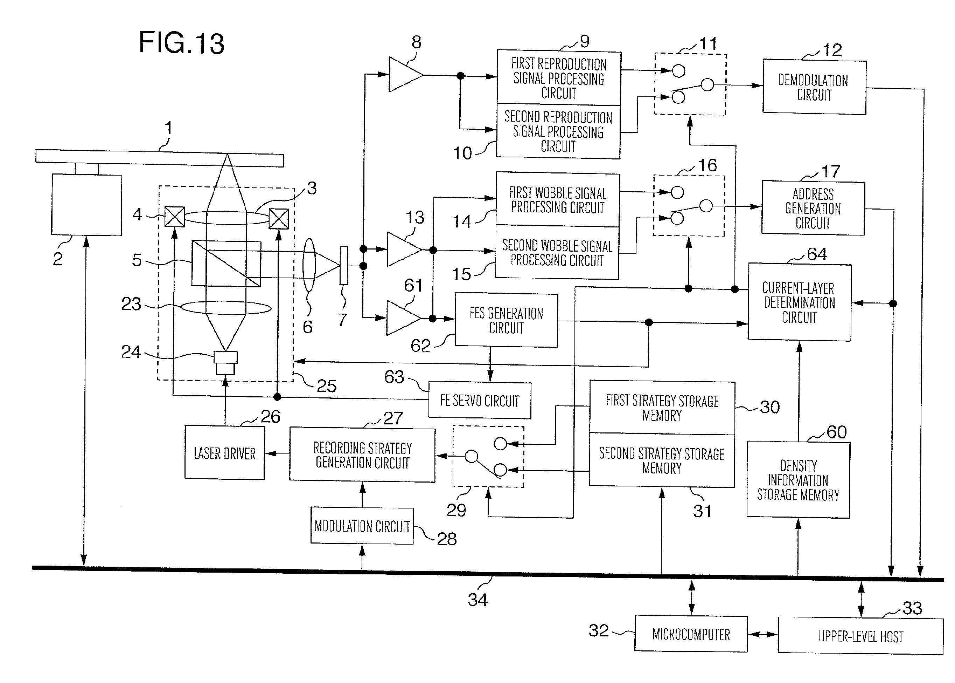

FIG. 13 shows an arrangement example of an optical disc recording/reproducing device in the present embodiment. In the present embodiment, in addition to the arrangement of FIG. 3, a density information storage memory 60, a focus error signal (FES) generation circuit 62, a focus error servo circuit 63, and a current-layer determination circuit 64. The FES generation circuit 62 generates a TES signal from each layer, and the focus error servo circuit 63 performs focusing operation to the target layer.

The density information of each layer read out from the type D disc is stored in the density information storage memory 60 and referred to by the current-layer determination circuit 64. The current-layer determination circuit 64 receives an FE signal from the FES generation circuit 62 and a reproduction address from the address generation circuit 17 and determines that the current layer corresponds to what order of layer among the layers. The current-layer determination circuit also determines that the recording density of the current layer, that is, 25 GB/layer or 33 GB/layer on the basis of the density information from the density information storage memory 60. According to the determination result, changeover is carried out between the first and second reproduction signal processing circuits 9 and 10, between the first and second wobble signal processing circuits 14 and 15, and between the first and second strategy storage memories 30 and 31.

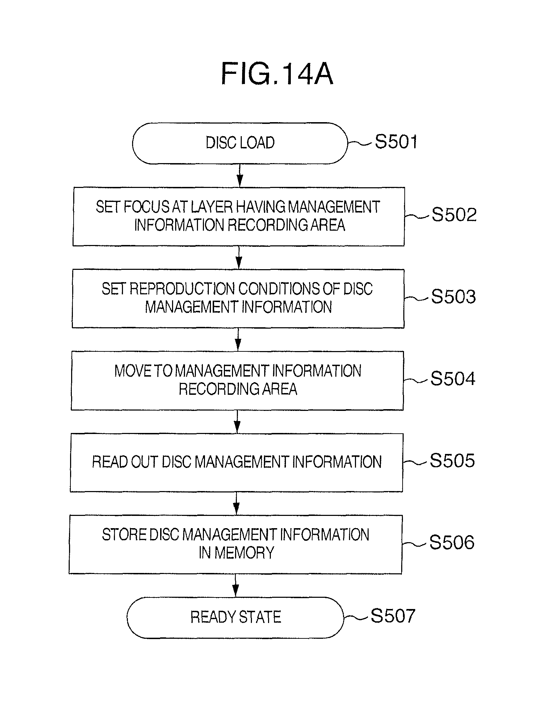

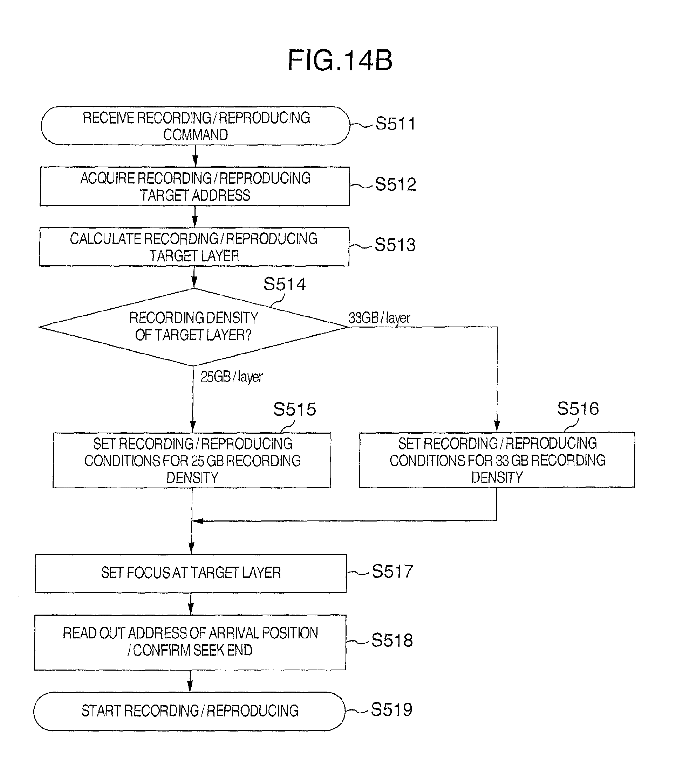

FIGS. 14A and 14B are flow charts showing a procedure of recording/reproducing operations in the present embodiment, wherein FIG. 14A shows steps when a disc is loaded in the device and FIG. 14B shows steps in a recording/reproducing mode.

In a step S501, a disc is loaded into an optical disc device. In this case, the disc is of the type D having a plurality of standard density layers (of 25 GB/layer) and a plurality of high density layers (of 33 GB/layer), which layers are mixed and form a multilayer.

In a step S502, the focus of the optical head is pulled in at a specific layer (layer L0) having the disc management information (data recording density information) recorded therein.

In a step S503, reproduction conditions for reading out the disc management information from the disc are set.

In a step S504, the optical head is moved to the management information recording area (PIC area 122) on the disc.

In a step S505, the disc management information is read out from the management information recording area.

The disc management information read out from the PIC area as a management information recording area is considered to include information which follow.
1. Information on the layer structure of the disc recorded at byte 12.
2. Standards management information such as disc version information recorded at byte 11.
3. Disc channel bit length recorded at byte 13.

In a step S506, the disc management information (the data recording density of each layer) read out from the management information recording area is stored in the density information storage memory 60.

In a step S507, the device waits for a command from a host computer to record/reproduce information.

The device next goes to the recording/reproducing operation.

In a step S511, the device receives a command from the host computer to record/reproduce the information.

In a step S512, the device acquires a target address for the recording/reproducing operation from the received command.

In a step S513, the device calculates on the basis of the recording/reproducing target address that the target layer corresponds to what order layer among the layers.

In a step S514, information stored in the density information storage memory 60 is referred to determine the recording density of the target layer.

When the recording density is for 25 GB/layer, the device goes to a step S515 to set it in the recording/reproducing conditions (reproduction signal processing circuit, wobble signal processing circuit, recording strategy) for the 25 GB/layer.

When the recording density is for 33 GB/layer, the device goes to a step S516 to set it in recording/reproducing conditions (reproduction signal processing circuit, wobble signal processing circuit, recording strategy) for the 33 GB/layer.

In a step S517, the focus of the optical head is set at the target layer.

In a step S518, the device reads out an address at an arrival position and confirms seek end.

In a step S519, the device starts its recording/reproducing operation.

In the present embodiment, even when the disc is a multilayer disc of the type D having different data recording densities in the respective layers, the disc management information (on the recording densities of the respective layers) are recorded in the PIC area with an inherent format. Thus reproduction conditions of the management information can be uniquely determined easily without any error. And recording/reproducing operation suitable for the recording densities can be executed according to the recording density of the target layer in the disc.

### EMBODIMENT 4:

Similarly to the above embodiment 3, even the present embodiment is intended to use a multilayer disc having layers of a data recording density of 25 GB/layer and high density layers of 33 GB/layer mixedly present therein. However, the present embodiment is arranged so that the disc management information (data recording density information) is recorded in part of the data recording area of the standard density of 25 GB/layer (which disc will be referred to as the type E, hereinafter). In this case, since the management information is recorded using the data recording area, information can be recorded after disc manufacture. For example, the disc manufacturer inspects each disc after the disc manufacture and determine the presence or absence of an unusable defect layer. And the disc manufacturer can record the determination result together with recording density information on the respective layers in the disc management information.

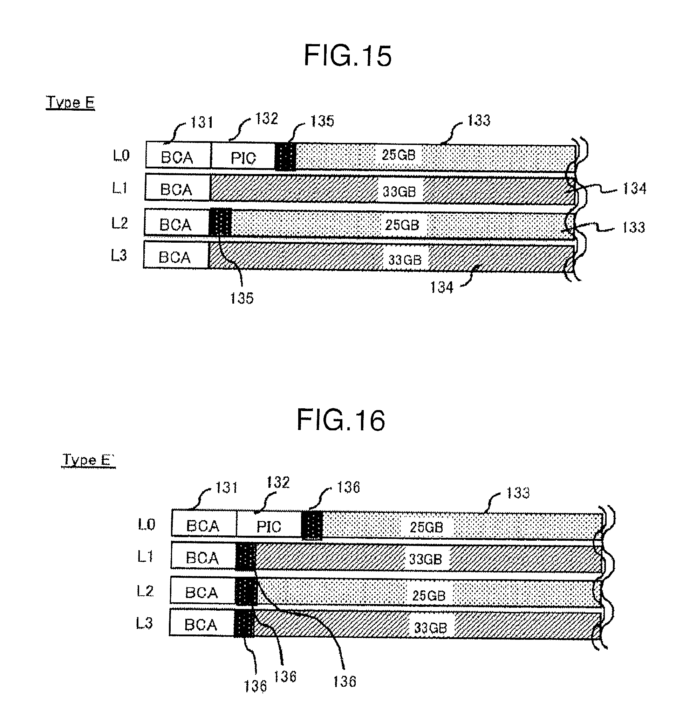

FIG. 15 shows an example of a recording format of the optical disc (of the type E).

The disc is assumed to have a total of 4 layers including layers of 25 GB/layer and layers of 33 GB/layer alternately laminated, and the layers are denoted by L0, L1, L2 and L3 sequentially from the surface side of the disc. A BCA area 131, a PIC area 132 (provided only for the layer L0), and data recording areas 133 and 134 are located sequentially from the inner peripheral side of the disc. A management information recording area 135 is provided in the layer L0 having a standard density of 25 GB/layer and in part of the data recording area 133 of the layer L2. By recording the management information in the areas of the standard recording density in this way, the format of the management information can be uniquely determined and the management information can be read out reliably even in the prior art device. In this connection, if the layer L0 is previously determined to be always a recording layer of the standard density of 25 GB/layer, the management information can be more reliably read out. Or the management information recording area 135 may be provided in the data recording area of a recording layer having a minimum data recording density.

The management information is recorded in the management information recording area 135 in the form of an emboss pit or a rewritable mark. The contents of the management information includes information about a data recording density of each layer and about permission or non-permission of use of the layer. For example, when the layer is usable, the management information is "1" bit; whereas, when the layer is unusable, the management information is "0".

FIG. 16 shows another example of the recording format of an optical disc (of a type E). The type E' is given for distinguishing from the type E of FIG. 15.

This type is arranged so that, even when the device cannot determine which layer has a standard recording density (of 25 GB/layer), the device can be compatible with the disc. To this end, a management information recording area 136 is provided for all the layers of the disc. The management information is recorded in any of the areas in the form of an emboss pit or a writable mark according to the format of the standard recording density (of 25 GB/layer).

The optical disc device reads out the disc management information (recording density information, use permission/non-permission information) from a disc when loaded in the device, and stores it in a density information storage memory. Since the device switches between recording/reproducing conditions according to the recording densities of the layers in a recording/reproducing mode, and stops its recording/reproducing operation of the unusable layer, wasteful operation can be avoided.

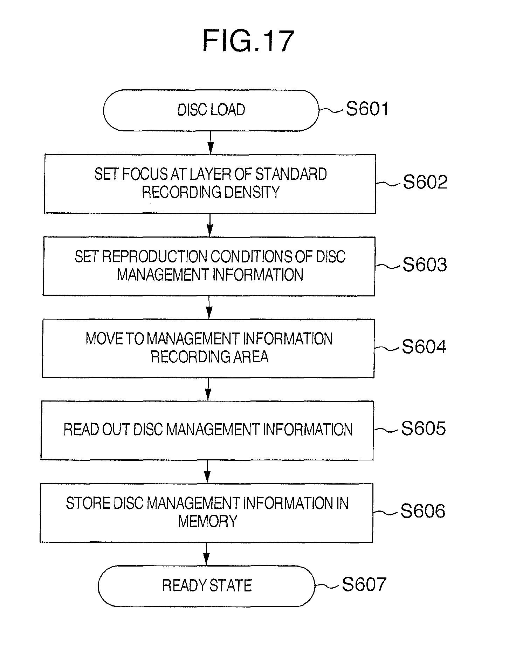

FIG. 17 shows a flow chart of a procedure of recording/reproducing operations in the present embodiment. FIG. 17 shows steps when a disc is loaded.

In a step S601, a disc is loaded in an optical disc device. In this case, the disc is of the type E or E' having layers of a standard density (of 25 GB/layer) and layers of a high density (of 33 GB/layer) present therein in the form of a multilayer. The management information is recorded in a data recording area of the layer of the standard density (of 25 GB/layer).

In a step S602, the focus of the optical head is set at the layer of the standard density (of 25 GB/layer). In the case of the disc (of the type E) of FIG. 15, the head focus is set at the layer L0 or L2. In the case of the disc (of the type E') of FIG. 16, the head focus can be set at any of the layers.

In a step S603, reproduction conditions are set to read out disc management information from the disc. That is, reproduction conditions for the standard density (of 25 GB/layer) are set.

In a step S604, the optical head is moved to the management information recording area 135 or 136.

In a step S605, the disc management information is read out from the management information recording area.

In a step S606, the read-out disc management information (recording density information, use permission/non-permission information) is stored in the density information storage memory 60.

In a step S607, the device waits for a command from the host computer to record/reproduce information. The device, when receiving the command, go to the recording/reproducing operation.

In a recording/reproducing step, device determines the recording density of a target layer and switches between recording/reproducing conditions according to the recording density. When the target layer is an unusable layer, the device stops the recording/reproducing operation of the layer in question and reports the fact to the host computer as necessary.

In the present embodiment, when the disc is a multilayer disc (of the type E or E') having layers different in the recording density, the disc management information (recording densities of the respective layers, use permission/non-permission information) is recorded in part of the data recording area of the standard density with the format of the standard density. Thus, reproduction conditions for the management information can be uniquely determined without any error. The unusable recording layer can be avoided by not only executing the recording/reproducing operation conforming to the recording densities of the layers but also referring to the use permission/non-permission information about the layers.

In the respective embodiments explained above, explanation has been made as to two types of data recording densities of 25 and 33 GB/layer. However, the present invention is not limited to this example. The present invention can be similarly applied to a disc having 3 or more types of data recording densities.

### EMBODIMENT 5:

In the present embodiment, a multilayer blu-ray disc (BD) is used similarly to in the first embodiment, the disc has the standard data recording density (of 25 GB/layer) for all layers (which disc will be referred to as a type A, hereinafter), or has the high data recording density (of 33 GB/layer) for all layers which disc will be referred to as a type B, hereinafter. With respect to the number of such layers, both types of discs are arranged, for example, to have a total of a 100 GB capacity with 4 layers of 25 GB or with 3 layers of 33GB. How to represent disc management information (data recording density information) in the type A or B disc is similar to in the first embodiment of FIG. 1, and explanation thereof is omitted.

In the present embodiment, explanation will be made in connection with examples wherein, when the disc is of the type A or B, the device determines data recording density information from the disc management information recorded in a recording density area not depending on the data recording density explained in the first embodiment, for example, in the BCA or PIC area, and wherein, when the disc has recording densities different from a predetermined recording density is used, reproducing and recording operations are stopped. In this example, the device can correctly recognize that the device is not compatible with the recording/reproducing operation of the disc, and can eject the disc on the basis of the recognized result or can avoid acceptance of operations other than the ejecting operation, whereby adverse effects on the disc or on the device can be prevented.

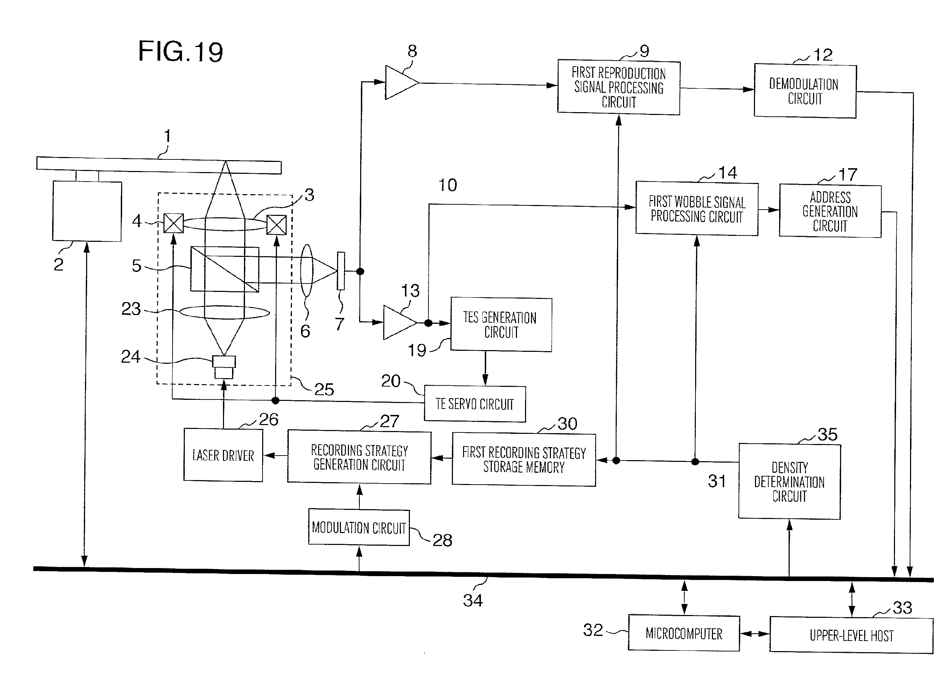

FIG. 19 shows an arrangement example of a recording/reproducing device in the present embodiment. The recording/reproducing device is assumed to be compatible with an optical disc having only the standard recording density and not to be compatible with an optical disc having the high recording density.

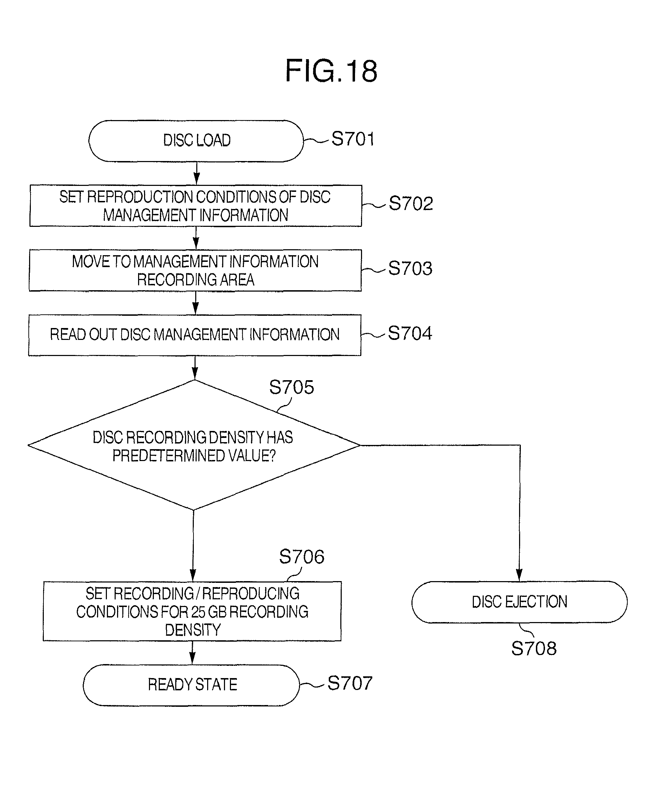

FIG. 18 shows a flow chart of a procedure of processing operations in the present embodiment. In this case, FIG. 18 shows steps when a disc is loaded in the device.

In a step S701, a disc is loaded in an optical disc device. In this case, the disc is of the type A having recording density of 25 GB/layer or of 33 GB/layer.

In a step S702, reproduction conditions are set to read out the disc management information (data recording density information) from the disc. That is, the reproduction conditions conforming to the format of the BCA or PIC 101 or 102 are set.

In a step S703, the optical head is moved to the management information recording area (BCA or PIC area) on the disc.

In a step S704, the disc management information is read out from the management information recording area.

In a step S705, it is determined on the basis of the read-out recording density information whether not the data recording density of the disc is a predetermined recording density, for example, 25 GB/layer (type A).

When the disc management information is read out from the PIC area shown in FIG. 22 to determine the data recording density, methods which follow are considered.
1. Determination based on information about the layer structure of the disc recorded at byte 12.
2. Determination based on Standards management information including version information recorded in a byte 11.
3. Determination based on the channel bit information of the disc recorded at byte 13.

When device determines, according to the above recording density determining method, that the recording density of the disc is 25 GB/layer (the type A), the device goes to a step S706, and similarly to the first embodiment, sets the recording/reproducing conditions (reproduction signal processing circuit, wobble signal processing circuit, recording strategy) of 25 GB/layer and puts the state of the device in such a state (ready state) as to wait for a command from a host computer to instruct recording/reproducing of information in a step S707.

When the recording density of the disc is determined to be other than 25 GB/layer (type A), the device goes to the step S707 to perform ejecting operation of the disc from the optical disc device.

When there is no such disc determining operation as in the present embodiment, or in other words, when a disc of the type B is loaded into the optical disc device compatible with the recording/reproducing operation of only the type A, the device cannot perform its recording/reproducing operation due to a difference in data recording density, which results in that such an accident is considered in the worst case to take place as data recorded on the disc of the type B is destroyed. To avoid this, the present embodiment is arranged to determine the disc reproduction information from a recording density area not depending on the data recording density and to perform suitable disc ejecting operation, thus enabling previous prevention of the aforementioned accident occurrence.

In the first and fifth embodiments 1 and 5, the disc of a structure of 4 layers (having 25 GB/layer) and the disc of a structure of 3 layers (having 33 GB/layer) have been shown as an example of the number of layers. As a matter of course, however, even when the type A has a structure of one layer or two layers and the type B has a structure of three layers or four layers, the present invention can have similar effects.

Although 25 GB/layer and 33 GB/layer have been shown as an example of recording densities different in the user data in the present invention, the present invention is not limited to these values of the recording densities, as long as there are areas of 2 or more types of different user data recording densities.
Although the above explanation has been made in connection with the embodiments, it will be obvious to those skilled in the art that the present invention is not limited to the above embodiments and may be modified or changed in various ways within the sprit of the invention and attached claims.

### REFERENCE SIGNS LIST

- 1;: optical disc
- 2;: spindle motor
- 9, 10;: reproduction signal processing circuits
- 12;: modulation circuit
- 14, 15;: wobble signal processing circuits
- 17;: address generation circuit
- 25;: optical head
- 27;: recording strategy generation circuit
- 30, 31;: strategy storage memories
- 32;: microcomputer
- 35;: density determination circuit
- 40;: rotation control circuit
- 42, 43;: rotation control coefficient storage memories
- 50, 60;: density information storage memories
- 51;: address determination circuit
- 52;: Tracking Error zerocross Signal (TES) count circuit
- 62;: focus error signal (FES) generation circuit
- 64;: current-layer determination circuit
- 101, 111, 121, 131;: BCA (Burst Cutting Areas) areas
- 102, 112, 122, 132;: PIC (Permanent Information & Control data) areas
- 103, 104, 113, 114, 123, 124, 133, 134;: data recording areas
- 135, 136;: management information recording areas

## Claims

1. An optical disc for recording information with a predetermined recording density, comprising:
a data recording area for recording information therein;
a BCA (Burst Cutting Area) area having a recording density independent of a recording density of the data recording area; and
a PIC (Permanent Information & Control data) area having data recorded therein with a format different from the recording format of the data recording area,
wherein disc management information including information on the data recording density of the data recording area is recorded in the BCA and PIC areas.

2. An optical disc capable of recording information with a plurality of recording densities, comprising:
a plurality of data recording areas located to be divided in the same plane for recording information with mutually different data recording densities; and
a BCA (Burst Cutting Area) area having a recording density independent of recording densities of the data recording areas; and
a PIC (Permanent Information & Control data) area having data recorded therein with a format different from the recording format of the data recording area,
wherein a management information recording area for recording of disc management information including information about the data recording densities of the plurality of data recording areas and about boundary positions of the data recording areas is recorded in the BCA and PIC areas.

3. An optical disc having a plurality of recording layers capable of recording information with a plurality of recording densities, comprising:
a plurality of data recording areas for recording information with data recording densities different in the recording layers;
a BCA (Burst Cutting Area) area having a recording density independent of the recording densities of the data recording areas; and
a PIC (Permanent Information & Control data) area having data recorded therein with a format different from the recording format of the data recording area,
wherein a management information recording area for recording of disc management information including information about the data recording densities of the data recording areas of the respective layers is recorded in the BCA and PIC areas. management information recording area for recording disc management information including information about data recording densities of the data recording areas in each recording layer is recorded in the BCA area.

4. An optical disc recording device for recording information in a data recording area in an optical disc or reproducing the information therefrom, disc management information including information about a data recording density of the data recording area being recorded in BCA (Bursting Cutting Area) and PIC (Permanent Information & Control data) areas of the disc, the device comprising:
a recording density determination circuit for determining the data recording density on the basis of the disc management information; and
a recording/reproducing setting circuit,
wherein recording/reproducing conditions are selected according to the data recording density determined by the recording density determination circuit and are set in the recording/reproducing setting circuit.

5. An optical disc reproducing device for reproducing information in a data recording area of an optical disc, disc management information including information about a data recording density of the data recording area being recorded in BCA (Bursting Cutting Area) and PIC (Permanent Information & Control data) areas the disc, the device comprising:
a recording density determination circuit for determining the data recording density of the target data recording area on the basis of the disc management information; and
a recording/reproducing setting circuit,
wherein reproduction conditions are selected according to the data recording density determined by the recording density determination circuit and are set in a recording/reproducing setting circuit.

6. An optical disc recording device according to claim 4, wherein the optical disc has a plurality of recording layers and has a plurality of data recording areas for recording information with data recording densities different in the recording layers, the device comprises a layer determining circuit for referring to the data recording density information detected from the disc management information and for determining the data recording density, and when the data recording density is switched according to the determination of the layer determining circuit, recording/reproducing conditions are selected according to the data recording density and are set in the recording/reproducing setting circuit.

7. An optical disc reproducing device according to claim 5, wherein the optical disc has a plurality of recording layers and has a plurality of data recording areas for recording information with data recording densities different in the recording layers, the device comprises a layer determining circuit for referring to data recording density information detected from the disc management information and determines the data recording density, and when the data recording density is switched according to the termination of the layer determining circuit, reproduction conditions are selected according to the data recording density and are set in the recording/reproducing setting circuit.

8. A information recording/reproducing method of recording information in a data recording area of an optical disc or reproducing the information therefrom, disc management information including information about a data recording density of the data recording area being recorded in BCA (Bursting Cutting Area) and PIC (Permanent Information & Control data) areas of the optical disc, the method comprising the steps of:
reading out the disc management information;
determining a data recording density based on the read-out disc management information;
selecting and setting reproduction conditions according to the determined data recording density; and
recording or reproducing information under the set recording/reproducing conditions.

9. An information reproducing method of reproducing information from a data recording area of an optical disc, disc management information including information about a data recording density of the data recording area being recorded in BCA (Bursting Cutting Area) and PIC (Permanent Information & Control data) areas of the optical disc, the method comprising the steps of:
reading out the disc management information;
determining the data recording density based on the read-out disc management information;
selecting and setting reproduction conditions according to the determined data recording density; and
reproducing information under the set reproduction conditions.

10. An information recording/reproducing method according to claim 8, wherein the optical disc has a plurality of recording layers and has a plurality of data recording areas capable of recording data with data recording densities different in the recording layers, the method comprising the steps of:
referring to the data recording density based on the disc management information; and
selecting and setting recording/reproducing conditions according to the data recording density of the data recording area.

11. An information reproducing method according to claim 9, wherein the optical disc has a plurality of recording layers and has a plurality of data recording areas capable of recording data with data recording densities different in the recording layers, the method comprising the steps of:
referring to the data recording density based on the disc management information; and
selecting and setting reproduction conditions according to the data recording densities of the recording layers.

12. An optical disc reproducing device for reproducing information in a data recording area of an optical disc, wherein disc management information including information about a data recording density of the data recording area is recorded in BCA (Bursting Cutting Area) and PIC (Permanent Information & Control data) areas of the disc, the device comprises a recording density determination circuit for determining the data recording density of the target data recording area on the basis of the disc management information, and reproducing operation of the optical disc is stopped according to the data recording density determined by the recording density determination circuit.

13. An optical disc recording device for recording information in a data recording area of an optical disc or reproducing the information therefrom, wherein disc management information including information about a data recording density of the data recording area is recorded in BCA (Bursting Cutting Area) and PIC (Permanent Information & Control data) areas of the optical disc, the device comprises a recording density determination circuit for determining the data recording density based on the disc management information, and recording operation of the optical disc is stopped according to the data recording density determined by the recording density determination circuit.

14. An information reproducing method of reproducing information in a data recording area of an optical disc, disc management information including information about a data recording density of ht data recording area being recorded in BCA (Bursting Cutting Area) and PIC (Permanent Information & Control data) areas of the optical disc, the method comprising the steps of:
reading out the disc management information;
determining the data recording density on the basis of the read-out disc management information; and
stopping reproducing operation of the information according to the determined data recording density.

15. An information recording method of recording information in a data recording area of an optical disc, disc management information including information about a data recording density of the data recording area being recorded in BCA (Bursting Cutting Area) and PIC (Permanent Information & Control data) areas of the optical disc, the method comprising the steps of:
reading out the disc management information;
determining the data recording density on the basis of the read-out disc management information; and
stopping recording operation of the information according to the determined data recording density.
